(19) Europäisches Patentamt
European Patent Office
Office européen des brevets

(11) Numéro de publication : **0 166 710 B1**

(12) # FASCICULE DE BREVET EUROPÉEN

(45) Date de publication du fascicule du brevet : **17.08.88**

(51) Int. Cl.⁴ : **C 22 B 19/22**

(21) Numéro de dépôt : **85870071.9**

(22) Date de dépôt : **22.05.85**

(54) **Procédé de lixiviation de sulfures contenant du zinc et du fer.**

(30) Priorité : **28.05.84 LU 85385**

(43) Date de publication de la demande : **02.01.86 Bulletin 86/01**

(45) Mention de la délivrance du brevet : **17.08.88 Bulletin 88/33**

(84) Etats contractants désignés : **AT BE CH DE FR GB IT LI LU NL SE**

(56) Documents cités :
**EP-A- 0 100 237**
**DE-C- 238 890**
**FR-A- 666 218**
**FR-A- 1 447 094**
**FR-A- 1 492 518**
**FR-A- 2 113 862**
**GB-A- 22 855**
**GB-A- 2 114 966**
**US-A- 4 004 991**
**Le dossier contient des informations techniques présentées postérieurement au dépôt de la demande et ne figurant pas dans le présent fascicule.**

(73) Titulaire : **SOCIETE DES MINES & FONDERIES DE ZINC DE LA VIEILLE MONTAGNE S.A.**
**Quai St. Paul de Sinçay, 32**
**B-4900 Angleur (BE)**

(72) Inventeur : **Andre, Jean Alfred Auguste**
**Quai de Rome, 70-071**
**B-4000 Liege (BE)**

(74) Mandataire : **De Palmenaer, Roger et al**
**Bureau Vander Haeghen 63, avenue de la Toison d'Or**
**B-1060 Bruxelles (BE)**

**EP 0 166 710 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention est relative à un procédé hydrométallurgique pour extraire du zinc et au moins une partie du cuivre et récupérer du plomb et de l'argent de matières sulfureuses zincifères contenant également du fer et au moins un des métaux : cuivre, plomb, argent comprenant (1) un broyage fin de ladite matière sulfureuse zincifère et (2) une lixiviation de cette matière en au moins 2 étapes comprenant :

(A) une première lixiviation sous pression de cette matière à une température comprise entre 120 et 160° C, au-delà de la température de fusion du soufre dans des conditions oxydantes et en présence d'une solution aqueuse d'acide sulfurique, le zinc n'étant pas complètement solubilisé ;

(B) une seconde lixiviation du résidu non dissous de la première étape (A) en présence d'une solution aqueuse d'acide sulfurique, en excès stœchiométrique par rapport au zinc résiduel et dans des conditions oxydantes obtenues par une fine dispersion d'oxygène de façon à produire d'une part une solution de sulfate de zinc et d'autre part un résidu non dissous contenant du soufre, du zinc résiduel, du cuivre résiduel, du fer et la majeure partie du plomb et d'argent et on retourne, après séparation liquide-solide, cette solution de sulfate de zinc à la première étape de lixiviation.

L'invention est relative à un procédé qui peut être intégré dans des usines hydrométallurgiques existantes et qui, par sa souplesse, contribuera à permettre à celles-ci de traiter des blendes d'origines diverses.

On connaît par le brevet français N° 2 207 192 un procédé pour extraire le zinc présent dans les matières sulfureuses contenant du zinc et du fer, suivant lequel on disperse lesdits sulfures, à l'état de fine division, dans une solution aqueuse d'acide sulfurique en réglant dans la dispersion les quantités relatives d'acide et de sulfures de manière que la quantité d'acide présente soit au moins suffisante pour convertir sélectivement le zinc présent en sulfate de zinc jusqu'à une concentration prédéterminée, le mélange réactionnel étant porté, sous pression, en présence d'oxygène, à une température supérieure à la température de fusion du soufre. Le degré d'acidité du mélange réactionnel en fin de réaction, est choisi faible, de manière à assurer l'élimination du fer de la solution de lixiviation, par précipitation sous forme d'un résidu insoluble de jarosite $KFe_3(SO_4)_3(OH)_6$ ou $NaFe_3(SO_4)_3(OH)_6$, d'hydroxyde de fer et de sulfate basique de fer.

Ces résidus contiennent également les sulfures non dissous de fer et de cuivre, du soufre, de l'argent et du plomb.

Ces derniers se présentent principalement sous la forme d'argentojarosite $AgFe_3(SO_4)_2(OH)_6$ et de plombojarosite $PbFe_6(SO_4)_4(OH)_{12}$.

En traitant ces résidus par flottation, on obtient d'une part un concentré de soufre et de sulfures contenant une faible proportion d'argent et d'autre part un stérile contenant la quasi-totalité du plomb et de l'argent sous une forme cependant, si fortement diluée par le fer qu'il est très difficile de les récupérer d'une façon rentable.

On connaît également par le brevet américain N° 4 004 991, un procédé hydrométallurgique de lixiviation sous pression à deux phases, de sulfures minéraux contenant du zinc et du fer, à l'aide d'une solution aqueuse d'acide sulfurique en vue d'extraire le zinc. Il s'agit d'une extraction solide-liquide à contre-courant, effectuée en deux étapes successives dans des conditions de température et d'oxydation équivalentes à celles du brevet français N° 2 207 192 précité.

La phase à extraire est constituée de sulfures minéraux de départ finement divisés et de soufre fondu, tandis que le solvant est l'électrolyte de recyclage.

Pour obtenir une extraction rapide et complète du zinc et une solution finale de lixiviation d'une faible teneur en fer dissous et en acide libre, on effectue la première étape en présence d'un excès considérable de zinc vis-à-vis de l'acide disponible provenant de la seconde étape. La première étape permet une élimination poussée de l'acide et du fer.

On poursuit la seconde étape de lixiviation à partir du résidu de lixiviation de la première étape pour extraire complètement le zinc.

Les résidus de la seconde étape contiennent l'argent et le plomb principalement sous forme de jarosites qui sont en outre fortement diluées par des précipités de fer, en particulier par de l'hydroxyde de fer et par du sulfate basique de fer.

En soumettant ces résidus à une flottation, on obtient d'une part, un concentré de soufre et de sulfures à faible proportion d'argent et de plomb et d'autre part, un stérile plombifère.

Malgré le fait que ce stérile englobe la quasi totalité du plomb et de l'argent, la présence de grande quantité de jarosites, d'hydroxyde de fer et de sulfate basique de fer rend une récupération de ces métaux peu rentable.

Suivant un troisième procédé connu, décrit dans la demande de brevet anglais n° 2 114 966, on extrait le zinc et on récupère le plomb et les métaux précieux à partir de matières sulfureuses zincifères contenant ces métaux outre le fer.

Le procédé comporte une lixiviation à haute acidité et sous pression dans laquelle les matières sulfureuses zincifères sont lixiviées sous des conditions oxydantes à une température de l'ordre de 130° à 170° C et avec un excès d'acide d'au moins 40 à 100 % par rapport au zinc de la matière de départ, afin

de produire éventuellement en une étape, un résidu contenant la quasi-totalité du plomb et/ou d'argent et une solution de lixiviation contenant la quasi-totalité du zinc et du fer.

Le résidu est séparé de la solution de lixiviation et traité en 92 afin de récupérer le plomb et/ou l'argent.

Pour réaliser la mise en solution complète du zinc au cours de la lixiviation sous pression, il faut soumettre la dispersion à des conditions de température et d'oxydation tellement sévères que celles-ci entraînent l'oxydation substantielle du fer solubilisé.

Aux températures élevées auxquelles est soumise cette lixiviation, le fer oxydé forme rapidement des précipités de jarosites, entre autre de jarosites de plomb et d'argent, qui compromettent la récupération de ces métaux. Pour éviter la formation de précipités de jarosites, on maintient le degré d'acidité du mélange réactionnel, en fin de réaction à une valeur très élevée supérieure à 60-70 g/l d'acide libre, de manière à obtenir d'une part, une solution de lixiviation contenant la quasi-totalité du zinc et du fer de la matière de départ et d'autre part, un résidu non dissous qui contient une proportion majeure d'argent et de plomb ne contenant que peu de jarosites.

La solution de lixiviation est traitée en vue de récupérer le zinc en conduisant la solution vers un autre procédé dans lequel la matière zincifère est traitée pour récupérer le zinc et dans lequel le fer est précipité.

Ce résidu est traité par flottation et l'argent est récupéré dans un concentré de soufre avec un rendement pouvant atteindre 85 % au mieux.

Comme l'acidité de la solution finale de lixiviation des sulfures est très élevée, ce procédé prévoit d'amener ladite solution vers une étape de lixiviation à l'acide chaud d'un procédé de grillage-lessivage, dans lequel les matières sulfurées zincifères de départ sont d'abord grillées de manière à être transformées en matières contenant de l'oxyde de zinc et du ferrite de zinc et ensuite traitées préalablement avec une solution aqueuse diluée d'acide sulfurique provenant d'une lixiviation acide 104, afin de dissoudre l'oxyde de zinc et produire une solution de lixiviation contenant le zinc dissous et un résidu contenant du ferrite de zinc. Ce résidu est séparé de la solution de lixiviation 98 et un résidu pâteux contenant du ferrite de zinc est alors traité par une solution aqueuse concentrée d'acide sulfurique au cours d'une étape de lixiviation à l'acide chaud, afin de dissoudre le ferrite de zinc.

Dans cette étape, une partie de l'acide provenant de la lixiviation très acide à chaud 114 des sulfures est consommée au contact de l'oxyde de zinc provenant de la lixiviation à l'acide chaud 104.

La solution produite au cours de la lixiviation à l'acide chaud 108 du ferrite de zinc contient à la fois du zinc et du fer. Elle est séparée du résidu et conduite à une étape de réduction 112. Ce fer ferrite de la solution de lixiviation est réduit en fer ferreux et le fer ferreux est neutralisé et hydrolysé sous des conditions oxydantes en vue de précipiter le fer qui est séparé de la solution.

Le résidu de la lixiviation à l'acide chaud 108 traverse après décantation l'étage de lixiviation très acide à chaud 114.

Ce résidu final est ensuite traité en vue de récupérer l'argent.

Dans son ensemble, ce procédé connu résulte donc de la combinaison d'une lixiviation sous pression des sulfures, identique à celle décrite dans le brevet français N° 2 207 192 et d'une lixiviation sous pression de calcine provenant du grillage des matières sulfurées.

Ce procédé connu manque de souplesse car l'intégration de deux lignes de lixiviation différentes, de sulfures d'une part et de calcine d'autre part, est difficile à réaliser et à contrôler, lorsque les solutions de l'une des lignes servent à conduire les réactions du procédé de l'autre ligne.

En particulier, les oxydes contenus dans la calcine provenant du grillage préalable des matières sulfurées, ne sont pas lixiviées sous pression.

Un bilan de matière apporte la preuve que par ce procédé, on ne pourrait traiter dans la ligne de lixiviation sous pression des sulfures, que 15 à 25 % de la quantité globale de matières sulfureuses de départ.

Ces quantités indispensables de calcine seraient si élevées que ce procédé est réduit à un procédé d'appoint annexé à une unité classique traitant les matières zincifères sulfureuses par grillage.

En outre, on constate que par ce procédé, le cuivre contenu dans les matières sulfureuses de départ, n'est dissous que très partiellement. Le rendement de mise en solution dépasse même rarement 60 %. Le cuivre résiduel se retrouve alors dans le résidu de lixiviation et la perte pécuniaire peut s'avérer importante.

En outre, comme le cuivre résiduel est entraîné au cours de la flottation dans le concentré de soufre, à côté des quantités plus ou moins importantes d'argent, les traitements ultérieurs pour récupérer l'argent peuvent être rendus difficiles.

En quelques mots, le nœud du procédé de lixiviation développé par WEIR dans le brevet britannique n° 2 114 966 réside dans les particularités suivantes :

— maintenir le niveau d'acidité dans la solution résiduaire de la lixiviation sous pression au-dessus de 60 g/l afin d'éviter la formation d'un précipité de jarosite.

On avait en effet constaté que lorsque la concentration en acide libre de la solution descendait en dessous de 60 g/l il se produit un précipité de jarosite qui avait pour effet de contaminer le résidu de flottation avec des quantités signifiantes de fer.

La mise en solution presque complète du zinc des matières sulfureuses à la lixiviation sous pression

exige des conditions d'oxydation très élevées, spécialement en fin d'opération, ce qui a pour conséquence de produire une sulfatation directe de soufre des sulfures en sulfates.

Cette sulfatation directe est supérieure à au moins 8 % et provoque une accumulation de sulfate dans le circuit hydrométallurgique de la production de zinc avec la nécessité de précipiter cet excès au moyen de chaux, ce qui entraîne des coûts opératoires supplémentaires et des pertes de zinc.

Enfin, la récupération de l'argent dans le concentré de soufre étant limitée au mieux à 85 %, le reste de l'argent recueilli avec le stérile de la flottation est perdu si la teneur en plomb est insuffisante pour constituer une matière marchande. Si les matières sulfureuses sont riches en argent, la perte peut être importante.

La présente invention a pour but de remédier aux inconvénients mentionnés ci-dessus. Le but recherché par le procédé suivant l'invention est de lixivier des matières zincifères sulfureuses d'origines diverses contenant du cuivre et également du fer éventuellement riche en plomb et métaux précieux en livrant une solution contenant le zinc, le cuivre et le fer soluble dont l'acidité est suffisamment faible pour ne pas poser de problème à la suite des traitements exigés de cette solution avant l'électrolyse du zinc et des résidus contenant la majeure partie du plomb et des métaux précieux sous une forme telle qu'ils puissent être récupérés par flottation.

Dans ce but la présente invention concerne un procédé hydrométallurgique pour extraire du zinc et au moins une partie du cuivre et récupérer du plomb et de l'argent de matières sulfureuses zincifères contenant également du fer et au moins un des métaux : cuivre, plomb et argent comprenant :

(1) un broyage fin de ladite matière sulfureuse zincifère et

(2) une lixiviation de cette matière en au moins 2 étapes comprenant

(A) une première lixiviation sous pression de cette matière à une température comprise entre 120 et 160° C, au-delà de la température de fusion du soufre dans des conditions oxydantes et en présence d'une solution aqueuse d'acide sulfurique, le zinc n'étant pas complètement solubilisé ;

(B) une seconde lixiviation du résidu non dissous de la première étape (A) en présence d'une solution aqueuse d'acide sulfurique en excès stœchiométrique par rapport au zinc résiduel et dans des conditions oxydantes obtenues par une fine dispersion d'oxygène de façon à produire d'une part une solution de sulfate de zinc et d'autre part un résidu contenant du soufre, du zinc résiduel, du cuivre résiduel, du fer et la majeure partie du plomb et de l'argent et on retourne, après séparation liquide-solide, cette solution de sulfate de zinc à la première étape de lixiviation,

ledit procédé étant caractérisé en ce que :

(I) au cours de la première étape de lixiviation

(i) on ajoute lesdites matières de départ dans une solution aqueuse d'acide sulfurique comprenant également la solution produite à la seconde étape de lixiviation, d'une manière telle que le zinc contenu dans ladite matière soit en excès stœchiométrique par rapport à l'acide réellement consommé, cet excès étant inférieur à 15 %, en contrôlant la pression d'oxygène jusqu'à ce qu'on obtienne une solution de sulfate de zinc contenant de 20 à 60 g/l d'acide sulfurique libre ;

(ii) on contrôle la pression d'oxygène et l'excès desdites matières dans le but d'empêcher la précipitation du fer solubilisé avec le zinc en limitant la formation de fer ferrique grâce aux propriétés réductrices desdites matières, d'une manière telle que ladite solution de sulfate de zinc contienne une teneur en fer ferrique qui n'excède pas 1 à 5 g/l ;

(iii) on produit, grâce à ces contrôles, après séparation liquide-solide, un résidu non dissous contenant le soufre ayant réagi sous forme de soufre élémentaire, du zinc et du cuivre et du fer principalement sous forme de sulfures exempts de jarosites et pratiquement tout le plomb et l'argent exempts de jarosites,

(II) au cours de la seconde étape de lixiviation

(i) on effectue l'extraction du zinc contenu dans le résidu de la première étape en mettant en contact ce résidu avec une solution aqueuse d'acide sulfurique à une température intérieure d'ébullition du mélange et à la pression atmosphérique ;

(ii) on contrôle la quantité de cette solution de manière à ce que, après consommation de l'acide libre nécessaire à la mise en solution du zinc résiduel, la solution produite contienne un excès d'acide libre compris entre 60 et 160 g/l ;

(iii) on contrôle le potentiel électrochimique de la solution en ajustant la quantité d'oxygène de manière à produire une solution qui contienne de 2 à 3 g/l de fer ferrique et dans laquelle la majeure partie du cuivre résiduel de la première étape de lixiviation est dissous ;

(iiii) on produit, grâce à ces contrôles, un résidu final insoluble contenant le soufre ayant réagi substantiellement sous forme de soufre élémentaire, du fer sous forme de sulfure exempt de jarosite et la plus grande partie du plomb et de l'argent contenus dans la matière de départ sous une forme minéralogique telle que les minéraux de plomb et d'argent peuvent être récupérés par un procédé de flottation.

Un des avantages du procédé proposé est de permettre, soit d'accroître la capacité de production d'une unité existante possédant des unités de grillage sans avoir à agrandir celle-ci, soit de maintenir la production sans avoir à remplacer de vieilles unités de grillage. Comme ce procédé produit des solutions contenant le zinc et le cuivre à basse acidité, il s'intègre aisément aux unités existantes sans en perturber l'entité et il est également assez souple pour s'adapter à des mutations successives ou à des variations de

capacité.

Suivant une particularité de l'invention, on conduit la solution produite à la première étape de lixiviation et contenant 20 à 60 g/l d'acide sulfurique à une troisième étape de lixiviation dans laquelle

(i) on ajoute une quantité de ladite matière sulfureuse de départ d'une manière telle que le zinc contenu dans cette matière soit en excès stœchiométrique par rapport à l'acide sulfurique libre contenu dans cette solution, cet excès étant supérieur à 100 % ;

(ii) on contrôle le potentiel électrochimique de la solution en ajustant la quantité d'oxygène, l'excès de matière sulfureuse de départ et la quantité d'oxygène étant réglés de façon à produire une solution de sulfate de zinc ayant une concentration en acide sulfurique libre comprise entre 4 et 8 g/l et une concentration en fer ferrique comprise entre 1 et 2 g/l ;

(iii) on soumet cette solution après séparation liquide-solide, d'une manière connue, à des traitements de purification, suivis d'une électrolyse dans laquelle du zinc métal est produit et une solution aqueuse d'acide sulfurique est régénérée qui est utilisée dans les première et deuxième étapes de lixiviation ;

(iiii) on conduit le résidu insoluble contenant du soufre, du sulfure de zinc, du sulfure de cuivre et le fer substantiellement sous forme de sulfure exempt de jarosite et pratiquement tout à plomb et l'argent à la première étape de lixiviation,

lesdites opérations (i) et (ii) étant effectuées à la pression atmosphérique à une température inférieure à la température d'ébullition du mélange et en présence d'oxigène finement dispersé.

Dans un mode de réalisation particulier, on conduit la solution de la première étape de lixiviation (4) contenant de 20 à 60 g/l d'acide libre vers une neutralisation de l'acide libre en même temps que la solution (C) issue d'un traitement de lixiviation de calcine produite par grillage de matières sulfureuses zincifères.

On soumet ensuite la solution produite à la neutralisation à une hydrolyse en y ajoutant de la calcine en présence d'oxygène en vue de précipiter le fer sous forme de goethite qui est séparé de la solution et rejeté.

On soumet la solution produite à l'hydrolyse à une lixiviation neutre de calcine suivie d'une purification avec de la poussière de zinc et on soumet ensuite cette solution purifiée à une électrolyse dans laquelle du zinc métal est produit et une solution aqueuse d'acide sulfurique est régénérée qui est utilisée à la première et à la deuxième étape de la lixiviation des matières de départ et on fait réagir le résidu de la lixiviation neutre dans une lixiviation légèrement acide et on soumet le résidu ainsi obtenu à un traitement de résidu comprenant un lessivage à chaud, un lessivage très chaud et une étape de réduction par lequel la solution (C) du second procédé est produite.

D'autres particularités et détails de l'invention apparaîtront au cours de la description détaillée suivante, faisant référence aux dessins ci-joints représentant les schémas de principe de diverses installations hydrométallurgiques suivant l'invention.

Dans ces dessins :

— la figure 1 est une vue schématique d'un procédé de récupération de zinc, de matières sulfureuses de zinc contenant également du fer, du cuivre, du plomb et des métaux précieux par lixiviations successives suivant un mode préféré de l'invention ;

— la figure 2 est une vue similaire d'un procédé destiné à modifier une installation existante de traitement de sulfures après grillage ;

— la figure 3 est une vue similaire d'un procédé reliant le procédé de la figure 2 au procédé de la figure 1.

Dans les figures susdites, les mêmes notations de référence désignent des éléments identiques ou analogues.

Les matières sulfureuses zincifères disponibles sur le marché contiennent non seulement du zinc, mais également des quantités substantielles de fer et des quantités non négligeables de plomb, de cuivre et de métaux précieux qu'il est économiquement souhaitable de récupérer.

Le procédé de lixiviation suivant l'invention permet une récupération rentable de ces métaux. Il comprend au moins les opérations suivantes :

— pulvérisation du minerai de départ en fines particules, désignée par la notation de référence 1 ;

— une première lixiviation sous pression 4 à l'aide d'une solution acide sous vive agitation, en présence d'oxygène, à une température de l'ordre de 125 à 160 °C, l'acidité de la solution après cette lixiviation est comprise entre 20 et 60 g/l. ;

— une seconde lixiviation 6 effectuée à la pression atmosphérique, à l'aide d'une solution acide de retour de l'électrolyse, à une température inférieure à la température d'ébullition de la solution. La solution provenant de cette seconde lixiviation est recyclée vers la première lixiviation, tandis que le résidu, constitué principalement de soufre, de sulfure de fer et également de plomb et de métaux précieux est soumis à une flottation. Les métaux précieux et le plomb y sont récupérés avec un rendement élevé grâce à leur forme minéralogique favorable.

Comme illustré à la figure 1, une partie au moins de la matière de départ finement divisée en 1 est mise en suspension sous forme de pulpe, au cours d'une lixiviation atmosphérique 2 de basse acidité dans une solution provenant d'une lixiviation sous pression 4 en présence d'oxygène finement dispersé, sous vive agitation.

Les quantités relatives d'acide et de matières sulfureuses sont réglées de telle manière que le zinc de la matière de départ soit en excès stœchiométrique d'au moins 100 % par rapport à l'acide disponible pour produire une solution de sulfate de zinc contenant de 4 à 8 g/l d'acide libre, la quantité d'oxygène étant réglée simultanément pour que la teneur en fer ferrique de la même dite solution soit comprise entre 1 et 2 g/l. La température de la suspension est maintenue en dessous de la température d'ébullition de la solution et idéalement entre 75 et 95 °C.

Cette lixiviation peut, de la sorte, être effectuée dans une cuve ouverte ou fermée sous une très faible pression, idéalement entre 75 et 95 °C. Dans ces conditions de température et d'oxydation, le cuivre est maintenu en solution, malgré la présence de sulfures.

Le cuivre est maintenu en solution en tenant le potentiel oxydo-réducteur des solutions à une valeur aussi élevée que possible. D'autre part, le fer ne précipite pas malgré la faible acidité, si le potentiel des solutions est maintenu à une valeur suffisamment faible. En gardant la teneur de fer ferrique entre 1 et 2 g/l, on maintient simultanément le cuivre et le fer en solution. De ce fait, la solution produite à cette lixiviation, contient la quasi-totalité du cuivre contenu dans la solution alimentée produite au double étage de lixiviation 4 et 6 et également le fer dissous. Cette solution ne contient plus qu'une quantité d'acide négligeable.

La solution produite à la lixiviation 2 à basse acidité, après décantation 3 ou filtration, est conduite directement vers la précipitation du fer 25 par hydrolyse, sous forme de goethite obtenue par injection d'oxygène, le réactif de goethite étant de la calcine produite par grillage de matières sulfureuses. Après séparation du résidu de fer obtenu, la solution subit une élimination complète du fer et de diverses impuretés à la lixiviation neutre 12 effectuée en présence de calcine, le fer étant oxydé par de l'air ou de l'oxygène. Le résidu obtenu en 13 subit une lixiviation acide 14 destinée à compléter la mise en solution de l'oxyde de zinc. Le résidu de ferrite de zinc est traité à la lixiviation acide 6 décrite plus loin. La solution 15 est conduite vers la lixiviation neutre 12 dont la solution 13 est purifiée, par exemple suivant le procédé décrit dans le brevet belge n° 783.549 et ensuite conduite à l'électrolyse 32 où sont produits le zinc et la solution acide dite de retour de l'électrolyse.

Le résidu de la lixiviation 2, après séparation de la solution par épaississement ou filtration, est conduit en même temps que de la matière sulfureuse fraîche, si nécessaire, vers la lixiviation sous pression 4 qui constitue la première étape de la double lixiviation 4 et 6 dans un récipient sous pression, équipé d'un système d'agitation efficace, par exemple dans un autoclave ou un réacteur tubulaire. Ces matières y sont mélangées à la solution acide produite par la lixiviation 6 et la solution acide provient de l'électrolyse contenant de 160 à 200 g/l d'acide libre.

Le mélange y est traité en présence d'oxygène ou d'un gaz contenant de l'oxygène, à une température supérieure à la température de fusion du soufre, c'est-à-dire au-dessus d'environ 120 °C, mais à une température inférieure à environ 160 °C.

On ajuste les quantités relatives de matière sulfureuse dans la suspension 4, de manière que l'acidité de la solution diminue progressivement jusqu'à une valeur comprise entre 20 et 60 g/l sans rechercher une mise en solution complète du zinc de la matière, celle-ci étant cependant supérieure à environ 85 %.

Simultanément, la pression d'oxygène est choisie de façon à ce que la teneur en fer ferrique soit comprise entre 1 et 5 g/l à la fin de la lixiviation, la concentration en fer ferrique devant être d'autant plus faible que l'acidité finale recherchée est plus basse.

On a constaté qu'il est possible de mener la lixiviation sous pression et à haute température des sulfures, de façon à produire une solution de sulfate de zinc dans laquelle le fer est maintenu essentiellement à l'état ferreux, c'est-à-dire sous une forme grâce à laquelle le fer ne précipite pas de la solution.

On y parvient en réglant judicieusement, entre autres, l'agitation de la pulpe, de manière à favoriser au mieux les contacts solide-liquide, sans toutefois disperser trop activement l'oxygène.

En outre, on ne recherche pas la mise en solution de la totalité du zinc contenu dans la matière de départ. Cette mise en solution complète exige des taux d'oxydation exagérément élevés, qui donnent lieu à des réactions non désirées.

Comme le fer est maintenu dans sa forme réduite, on peut tolérer une acidité libre de la solution de sulfate de zinc substantiellement plus faible que celle obtenue par le procédé du brevet britannique N° 2 114 966, sans que le résidu obtenu ne contienne de jarosite provenant de la précipitation du fer. La relation entre fer ferreux et l'acidité de la solution est telle qu'il est recommandé, suivant l'invention, de garder la teneur en fer ferrique inférieure à 1 g/l, lorsque l'acidité atteint 20 g/l et à 5 g/l, lorsque l'acidité est de 50 g/l.

A condition de respecter les teneurs susdites, on empêche le fer dissous de précipiter sous forme de jarosite et en particulier on évite la formation d'argento- et de plombojarosite.

La pression d'oxygène peut rester constante durant toute la durée de la réaction de mise en solution des sulfures. Elle doit alors être réglée dès le départ en fonction du résultat final d'acidité souhaitée sans précipitation du fer, en tenant compte que le rendement de mise en solution du zinc doit être supérieur à 85 %.

La pression d'oxygène peut également décroître du début à la fin et être ainsi adaptée à la réactivité décroissante des sulfures au cours de la progression de la réaction. Cette variation de pression peut être obtenue dans un réacteur tubulaire.

On peut suivre la progression de la réaction en cours de lixiviation en prélevant une série d'échantillons qu'on soumet à une analyse automatique, afin de déterminer l'acidité et la concentration en fer total dissous et de mesurer le potentiel rédox. Un ordinateur calcule la teneur en fer ferrique en fonction du temps, de manière à permettre de suivre et de contrôler la progression de la réaction et de limiter le taux d'oxydation au niveau désiré.

La lixiviation sous pression 4 est conduite de manière à produire, d'une part, un résidu contenant des sulfures résiduels, dont ceux de zinc, de cuivre et de fer, le soufre ainsi que l'entièreté du plomb et des métaux précieux, dont principalement l'argent exempts de précipités de jarosite et d'autre part, une solution contenant en plus de l'acide résiduel, le fer dissous de la matière principalement sous forme de fer ferreux, le zinc et le cuivre de ladite matière. Le mélange est déchargé de l'autoclave que l'on a détendu à la pression atmosphérique et refroidi à une température comprise entre 75 et 95 °C. La solution obtenue après séparation du résidu, est conduite vers la lixiviation atmosphérique 2 de basse acidité décrite ci-dessus, où l'acidité résiduelle est épuisée jusqu'à environ 4 à 8 g/l.

Le résidu insoluble, séparé de la solution après épaississement en 5, est conduit à la lixiviation 6 qui constitue la seconde étape de la double lixiviation 4 et 6 et dispersé dans une solution d'acide sulfurique généralement constituée par la solution d'acide sulfurique généralement constituée par la solution de retour de l'électrolyse. Cette solution contient habituellement de 160 à 200 g/l d'acide libre. La température est maintenue inférieure à la température d'ébullition des solutions, de préférence entre 80 et 95 °C.

La dispersion est traitée dans un récipient à pression atmosphérique sous vive agitation avec injection d'oxygène finement dispersé au sein de la suspension, les quantités relatives d'acide et de résidu insoluble étant réglées de telle sorte que l'acidité finale soit comprise entre 60 et 160 g/l et de préférence entre 100 et 120 g/l.

La quantité d'oxygène injecté est telle que le potentiel oxydo-réducteur de la suspension ne dépasse pas une valeur faible durant toute la lixiviation, la teneur en fer ferrique étant de l'ordre de 2 à 3 g/l en fin d'opération.

Cette lixiviation est menée également en présence de résidu provenant de la lixiviation acide 14 décrite plus haut. En se dissolvant dans la solution acide, le ferrite de zinc contenu dans ce résidu apporte du fer ferrique en solution, qui sert d'oxydant aux sulfures et active de la sorte la cinétique de réaction.

Au cours de cette opération, le zinc est mis complètement en solution, bien qu'il soit connu que l'épuisement en zinc de matière sulfureuse par une lixiviation atmosphérique soit extrêmement difficile.

En même temps, le cuivre qui est principalement associé à la chalcopyrite se dissout presque complètement, le rendement d'extraction pouvant atteindre plus de 95 %. Cette mise en solution est favorisée par la présence simultanée de fer ferreux qui décompose la chalcopyrite en chalcocite et par la présence de fer ferrique oxydant cette chalcocite pour dissoudre le cuivre.

Les résidus obtenus après séparation par décantation 7 de la solution qui est conduite vers la lixiviation sous pression 4, sont lavés et traités par flottation. Le concentré de soufre et de sulfures obtenu contient environ 95 % de l'argent qui peut être récupéré, par exemple selon la méthode du brevet belge N° 847.991. Le stérile de la flottation ne contenant plus que des traces d'argent et éventuellement du plomb sous forme de sulfate, peut être éliminé définitivement ou, si les circonstances économiques sont favorables, être traité également par une flottation.

Le fait d'isoler l'argent presqu'entièrement dans une seule fraction du résidu des lixiviations a une répercussion économique importante car elle simplifie le problème de récupération de cette valeur et dissocie le problème de cette récupération de celle du plomb qui, très souvent, n'est pas rentable.

On a constaté également que la sulfatation des sulfures en sulfate au cours des deux étapes de lixiviation reste limitée à 3 à 6 %, ce qui correspond au taux de sulfatation obtenu habituellement au grillage des matières sulfureuses. Ce taux de sulfatation n'exige plus une purge des sulfates par l'addition de chaux.

Le calcul du bilan complet de l'ensemble de ces opérations indique que la proportion de matières sulfureuses pouvant être traitées sans grillage préalable s'élève à 75-80 % de l'alimentation globale, ce qui permet de réduire très fortement les taux d'utilisation des fours de grillage ou de limiter leur capacité dans la fabrication du zinc par hydrométallurgie.

Dans chacune des lixiviations susdites, on a adopté des conditions particulières pour réaliser les mêmes réactions chimiques. Ces réactions relatives, par exemple, à la mise en solution du zinc sont les suivantes :

$$ZnS + Fe_2(SO_4)_3 \longrightarrow ZnSO_4 + 2\ FeSO_4 + S \qquad (I)$$

$$2\ FeSO_4 + 1/2\ O_2 + H_2SO_4 \longrightarrow Fe_2(SO_4)_3 + H_2O \qquad (II)$$

Globalement, ces deux réactions peuvent s'écrire :

$$ZnS + 1/2\ O_2 + H_2SO_4 \longrightarrow ZnSO_4 + S + H_2O \qquad (III)$$

Des réactions semblables peuvent être écrites pour le fer, le plomb, le cuivre, le cadmium et l'argent.

Bien que le sulfure de fer contenu dans la matière se dissolve partiellement en même temps que le sulfure de zinc, il est nécessaire cependant, de veiller à ce que la solution contienne des ions de fer dès le début des réactions.

Ces réactions font intervenir trois phases : une phase contenant les sulfures de métaux, une phase liquide contenant l'acide et les ions de fer servant d'intermédiaire pour oxyder ces sulfures au moyen d'oxygène et enfin une phase gazeuse contenant l'oxygène.

Les sulfures métalliques dont principalement le sulfure de zinc sont donc oxydés par les ions ferriques de la solution pour former des sulfates métalliques solubles ou insolubles, des ions ferreux et du soufre formé dans une phase solide ou liquide suivant que la température est inférieure ou supérieure à environ 120 °C. Les ions ferreux de la solution sont oxydés en ions ferriques grâce à l'oxygène de la phase gazeuse.

Le résultat net est une consommation d'acide et d'oxygène avec formation de sulfate et de soufre. La cinétique de chacune des réactions (I) et (II) dépend non seulement de la température, mais également des divers processus de diffusion d'une part dans la phase liquide vers la phase solide et vice-versa et d'autre part de la phase gazeuse vers la phase liquide.

Pour des conditions précises d'agitation, de pression d'oxygène, de température, de réactivité des sulfures, un certain équilibre fer ferrique-fer ferreux s'établit. Comme la réactivité des sulfures décroît au cours du processus de leur mise en solution, cet équilibre se déplace progressivement vers des rapports fer ferrique-fer ferreux de plus en plus élevés.

Si l'on considère la lixiviation sous pression à une température supérieure au point de fusion du soufre, on constate que la mise en solution des sulfures de zinc suivant les réactions (I) et (II) est très rapide.

Afin de maintenir les conditions oxydantes dans des limites souhaitées, on agit selon l'invention, sur l'agitation du système triphasique pour favoriser davantage les transferts entre liquide-solide que les transferts entre gaz liquide et sur la pression partielle d'oxygène qui est soit maintenue à une valeur constante telle que la concentration en fer ferrique correspondant à un certain taux de dissolution de zinc ne dépasse pas celle qui est souhaitée, soit réglée d'une manière décroissante.

Comme le fer est maintenu dans sa forme réduite, on constate que l'acidité libre de la solution de sulfate de zinc peut être substantiellement faible, sans que le résidu obtenu ne contienne de jarosite provenant de la précipitation du fer. Cette précipitation a lieu selon la réaction suivante, par exemple :

$$Na_2SO_4 + 3\ Fe_2(SO_4)_3 + 12H_2O \rightleftharpoons Na_2SO_4 \cdot Fe_2(SO_4)_3 \cdot 4Fe(OH)_3 + 6H_2SO_4 \qquad (IV)$$

Simultanément, les ions Pb et Ag réagissent également avec le fer ferrique pour former des jarosites de plomb et d'argent suivant une réaction semblable.

La teneur en fer ferrique en solution est d'autant plus faible que l'acidité libre est plus réduite. Une augmentation de la température réduit la concentration en fer ferrique à acidité constante des solutions.

Il est recommandé suivant l'invention, pour ne pas précipiter de jarosite, de garder la teneur en fer ferrique à acidité constante des solutions.

Il est recommandé suivant l'invention, pour ne pas précipiter de jarosite, de garder la teneur en fer ferrique inférieure à environ 1 g/l lorsque l'acidité atteint 20 g/l et environ 5 g/l lorsque l'acidité est de 50 g/l.

A la température inférieure à la température d'ébullition des solutions et à la pression atmosphérique, les réactions 1 et 2 se déroulent suivant une cinétique nettement plus lente.

Le résidu de la lixiviation sous pression est lixivié en présence d'une solution acide en même temps que du résidu de ferrite de zinc en 6. Les ions ferriques apportés par cette matière et le maintien d'un taux d'acide élevé favorisent la mise en solution des sulfures résiduels. Le taux de fer ferrique est maintenu à des valeurs relativement faibles, de sorte que le rendement d'oxygène est maintenu à une valeur élevée. Les jarosites précipitées accidentellement à la lixiviation sous pression sont totalement redissoutes, les conditions opératoires étant telles que la réaction (IV) évolue vers la gauche.

Enfin, la neutralisation de l'acide libre contenu dans la solution provenant de la lixiviation sous pression 4 est effectuée en 2 suivant les mêmes réactions (I) et (II) au moyen de sulfures et d'oxygène.

On constate cependant que la cinétique de dissolution des sulfures devient extrêmement lente, lorsque l'acidité libre de la solution est inférieure à environ 35-40 g/l. Comme, en outre, la teneur en fer ferrique de la solution doit être maintenue à des valeurs assez faibles pour ne pas précipiter le fer sous forme de jarosite, il est nécessaire d'introduire un excès de sulfures pour augmenter le nombre de sites actifs de réaction. En même temps, le rendement d'oxygène peut être maintenu à une valeur élevée.

Ces trois opérations successives menées à contre-courant ont pour résultat d'une part, d'épuiser substantiellement l'acide libre de la solution de retour provenant de l'électrolyse 32 dont la teneur s'élève à environ 160 à 200 g/l, en produisant une solution de sulfate métallique principalement constituée de zinc, de fer et de cuivre ne contenant que peu d'acide libre et d'autre part d'épuiser complètement la matière sulfureuse du zinc et du cuivre qu'elle contient en produisant un résidu insoluble contenant le plomb et les métaux précieux.

Selon le procédé de la figure 2, la solution produite à la double lixiviation 4 et 6, pauvre en fer ferrique, est alimentée à la neutralisation 23 d'un circuit de lixiviation de calcine obtenue par grillage 11.

Le résidu de cette opération contient le ferrite de zinc insoluble que l'on traite dans deux étapes à contre-courant, à savoir la lixiviation chaude acide 16 et la lixiviation chaude très acide 18, laquelle est alimentée par la solution acide de retour de l'électrolyse 32. La solution finale de ces deux étapes à contre-courant contient le zinc et le fer provenant du ferrite de zinc. On réduit le fer en présence de matière sulfurique à la réduction 21. Le résidu de soufre et de sulfures résiduels est traité à la lixiviation sous pression 4. La solution ferreuse acide est neutralisée en même temps que la solution provenant de la lixiviation sous pression 4 à la neutralisation 23 comme expliqué plus haut. Le fer de la solution provenant de la neutralisation 23 est hydrolysé 25 par injection d'oxygène et addition de calcine comme neutralisant. Le résidu du fer est rejeté. La solution faiblement acide et contenant de faibles quantités de fer ferreux est traitée sur la lixiviation neutre 12 au moyen de calcine 11 pour être ensuite purifiée 31 et électrolysée 32. Le résidu de la lixiviation 12 est épuisé dans la lixiviation acide 14 dont le résidu de ferrite est traité sur les lixiviations chaudes 16 et 18. Une partie de ce résidu de ferrite est traitée à la lixiviation atmosphérique haute acidité 6. La proportion de matières sulfureuses pouvant être traitée sans grillage préalable peut atteindre 30 à 40 % selon les conditions opératoires de la lixiviation sous pression 4.

Selon le procédé de la figure 3, la solution ferreuse produite à la double lixiviation 4 et 6 est traitée à la lixiviation atmosphérique 41 en même temps que la solution produite par les deux étapes à contre-courant de lixiviation à chaud 16 et 18 de calcine décrits plus haut, en présence de matière sulfureuse zincifère mise en suspension sous une vive agitation et en présence d'oxygène injecté au sein de la pulpe sous une forme finement dispersée, la quantité de matière et d'oxygène étant réglée de façon à obtenir une acidité finale comprise entre 6 et 35 g/l et une teneur en fer ferrique comprise entre 1 et 2,5 g/l.

La température de la suspension est maintenue en-dessous de la température d'ébullition de la solution et de préférence entre 75 et 95 °C.

Le résidu obtenu après avoir séparé la solution par épaississement est alimenté à la lixiviation sous pression. On neutralise et précipite le fer de cette solution provenant de ladite lixiviation 4, solution que l'on traite ensuite suivant la même voie que celle décrite ci-dessus.

L'avantage du procédé est de permettre une très grande souplesse.

En effet, le dernier procédé permet de relier entre eux les deux procédés extrêmes représentés aux figures 1 et 2. Il permet, sans modification fondamentale, de passer progressivement du schéma de la figure 2 à celui de la figure 1.

Ainsi, une usine à zinc possédant des installations de traitement de calcine obtenue par grillage 11, peut annexer les opérations 1, 4 et 7 dont les solutions seront aisément traitées selon le schéma de la figure 2 dans l'installation existante ; une fraction de l'ordre de 30 % de matière sulfureuse peut y être lixiviée sans nécessiter un grillage.

En mettant en œuvre le procédé illustré à la figure 3, on peut traiter de plus en plus de matière sulfureuse sans grillage préalable, jusqu'à atteindre une quantité extrême de l'ordre de 80 % lorsqu'on met en œuvre le procédé illustré à la figure 1, dans lequel les opérations de retraitement des résidus de ferrite de zinc 16 à 19, 41, 42, 23, 24 de la calcine 11 sont supprimées, les cuves ainsi libérées étant progressivement utilisées pour les lixiviations atmosphériques des sulfures. Une installation existante peut donc, sans grande modification, voir augmenter sa capacité de production de zinc, ou peut sauvegarder sa capacité de production, même si on réduit le nombre d'unités de grillage.

Afin d'éviter une inhibition des réactions de mise en solution des sulfures, on ajoute avantageusement dans la suspension constituant le mélange réactionnel, une quantité efficace de composés organiques ayant des propriétés ioniques. Ces composés sont de préférence des polyélectrolytes ou des indicateurs d'oxydo-réduction. D'excellents résultats sont obtenus avec les polyélectrolytes suivants :

— les polymères et les copolymères amioniques d'acide acrylique avec de l'oxyde de polyéthylène ou du formaldéhyde et de la mélamine de poids moléculaire compris entre $10^5$ et $10^7$ et

— les polymères amioniques d'acide méthacrylique et des copolymères correspondants.

Parmi les indicateurs d'oxydo-réduction, deux composés ont été retenus. Ce sont l'ortho-phénylène diamine et les mélanges d'ortho-, méta- et paraphénylènediamine. Cependant, d'autres indicateurs d'oxydo-réduction usuels tels que le bleu de méthylène et l'acide diphénylamine-para-sulfonique peuvent être employés.

La quantité de composés organiques à ajouter est comprise généralement entre 0.1 et 1.0 g/litre de solution à lixivier sous pression.

Les minerais ou concentrés de départ peuvent être constitués de blendes d'origines diverses contenant des quantités variables de fer constituées soit de marmatite, soit de pyrite et contenant des valeurs variables de cuivre, de métaux précieux et/ou de plomb.

Les exemples suivants illustrent divers modes de réalisation du procédé :

Dans chacun de ces exemples, la matière sulfureuse de départ a la même composition répondant à l'analyse suivante :

Zn : 49,6 % ; Cu : 0,94 % ; Fe : 9,6 % ; Pb : 1,35 % ;
S tot. : 30,8 % et Ag : 120 g/t.

La solution de retour de l'électrolyse contient 195 g/l d'acide sulfurique libre et 55 g/l de zinc.

La matière sulfureuse est préalablement broyée jusqu'à ce qu'une fraction d'environ 92 % de la

matière traverse le tamis de 325 mailles. La pulpe provenant du broyage est filtrée. Le gâteau de filtration contient de l'ordre de 20 % d'humidité et est alimenté sous cette forme dans les différents essais des exemples qui suivent.

## Exemple 1

Cet exemple comporte trois essais.

Les deux premiers essais sont relatifs à une lixiviation sous pression. On veille à ce que les proportions de matière sulfureuse de départ et de solution acide produisent, après réaction, une solution de forte acidité résiduelle et fortement oxydée. Le troisième essai est relatif à une double lixiviation, c'est-à-dire une lixiviation sous pression suivie d'une lixiviation atmosphérique de la matière sulfureuse de départ. Les proportions de matière et de solution acide sont telles que la solution obtenue après lixiviation sous pression soit relativement peu acide et peu oxydée.

La lixiviation sous pression est effectuée dans un autoclave de 16 litres muni d'un agitateur et de contre-agitateurs. La température est maintenue à 135-140 °C après une montée rapide en température. La pression d'oxygène est maintenue à une pression partielle de 1 300 Kpa. L'oxygène est injecté au-dessus de la pulpe. La solution acide est constituée d'acide de retour de l'électrolyse à laquelle est ajoutée une solution dont la composition correspond à celle qui est produite à la lixiviation atmosphérique. Le mélange présente la composition suivante :

| | |
|---|---|
| $H_2SO_4$ | 185 g/l ; |
| Zn | 60 g/l ; |
| $Fe^{total}$ | 2 g/l ; |
| $Fe_3^+$ | 0,2 g/l ; |
| $Fe^{2+}$ | 1,8 g/l et |
| Cu | 0,5 g/l. |

On introduit 12 litres de cette solution dans l'autoclave. La quantité de matière sulfureuse est respectivement de :

| essai 1 | essai 2 | essai 3 |
|---|---|---|
| 127,5 g/l | 150 g/l | 200 g/l |

exprimé en gramme de matière (sèche) par litre de solution de lixiviation.

Le résidu insoluble obtenu aux deux premiers essais est filtré, lavé, repulpé à l'eau et soumis à une flottation pour séparer le soufre, les sulfures résiduels et l'argent.

Le résidu de l'essai est séparé par décantation et la pulpe épaissie, dont le volume est de deux litres, est pulpée avec six litres de solution de retour de l'électrolyse.

La pulpe est agitée à 90 °C en y dispersant de l'oxygène. Le résidu insoluble obtenu est filtré, lavé, repulpé à l'eau et soumis à une flottation dans les mêmes conditions que ci-dessus.

Les résultats sont repris dans les tableaux qui suivent.

Tableau 1 — Composition de la solution au cours de la lixiviation

| Essai | Conditions | Teneur de la solution | | | |
|---|---|---|---|---|---|
| N° | | $H_2SO_4$ g/l | $Fe_{tot}$ g/l | $Fe^{3+}$ g/l | Cu g/l |
| 1 | | 74 | 12,2 | 10,1 | 1,080 |
| 2 | | 58 | 12,7 | 10,6 | 1,190 |
| 3 | 1ère étape sous pression | 32 | 14,5 | 1,5 | 1,050 |
| | 2ème étape sous pression atmosphérique | 113 | 6,6 | 2,5 | 1,900 |

Tableau 2 — Composition du résidu insoluble et rendement de mise en solution

| Essai N° | | Teneur du résidu Zn % | Fe % | Cu % | S % | $S_{SO_4}$ % |
|---|---|---|---|---|---|---|
| 1 | | 1,70 | 4,60 | 1,32 | 76,2 | 0,54 |
| 2 | | 1,55 | 6,40 | 1,24 | 72,1 | 0,94 |
| 3 | 1ère étape | 10,40 | 7,50 | 1,44 | 66,1 | 0,38 |
| | 1ère+ 2ème étape | 2,20 | 5,65 | 0,063 | 75,55 | - |

Tableau 3 — Poids de matière zincifère mis en solution (%) et rendement de mise en solution (%) de divers métaux

| Essai N° | | Fraction de poids | Rendement de mise en solution exprimé en % | | | |
|---|---|---|---|---|---|---|
| | | | Zn | Fe | Cu | Stot. |
| 1 | | 62,8 | 98,7 | 82,2 | 47,8 | 8,0 |
| 2 | | 61,4 | 98,8 | 74,3 | 49,1 | 9,4 |
| 3 | 1ère étape | 55,1 | 90,6 | 65,9 | 31,2 | 3,3 |
| | 1ère+ 2ème étape | 60,4 | 98,2 | 76,8 | 97,3 | 3,1 |

Tableau 4 — Evolution de la composition de la solution de lixiviation de l'essai N° 3 lorsque ce dernier est effectué sous la pression atmosphérique

| Temps H | Teneur de la solution en $H_2SO_4$ | $Fe_{tot}$ | $Fe^{3+}$ | Cu |
|---|---|---|---|---|
| 0 | 147 | 3,6 | 0,1 | |
| 1 | 137 | 4,6 | 0,2 | |
| 2 | 127 | 5,6 | 0,7 | |
| 4 | 115 | 6,5 | 1,9 | |
| 5 | 113 | 6,6 | 2,5 | 1,90 |

La flottation des résidus obtenus fournit un concentré ébauché de soufre et un stérile de flottation. Le concentré ébauché est dilué à l'eau et subit lui-même une flottation produisant un concentré fini de soufre et un stérile de finissage. Le bilan des opérations est effectué à partir de l'analyse des diverses fractions.

Tableau 5 — Composition des fractions obtenues par flottation

| | Ag g/l | Pb % | Zn % | Fe % | Cu % | $S_{tot}$ % |
|---|---|---|---|---|---|---|
| Essai 1 | | | | | | |
| Concentré fini | 285 | 0,35 | 1,95 | 5,1 | 1,52 | 88,2 |

Tabelle 5 (Suite)

| | Ag g/l | Pb % | Zn % | Fe % | Cu % | $S_{tot}$ % |
|---|---|---|---|---|---|---|
| Stérile de finissage | 440 | 15,9 | 0,15 | 1,8 | 0,16 | 35,9 |
| Stérile de flottation | 430 | 21,8 | 0,07 | 1,65 | 0,06 | 3,9 |
| Essai 2 | | | | | | |
| Concentré fini | 260 | 0,40 | 1,65 | 6,3 | 1,45 | 83,1 |
| Stérile de finissage | 500 | 19,9 | 0,30 | 6,4 | 0,06 | 38,3 |
| Stérile de flottation | 555 | 20,1 | 0,25 | 5,8 | 0,03 | 4,7 |
| Essai 3 | | | | | | |
| Concentré fini | 310 | 0,56 | 2,35 | 6,1 | 0,072 | 84,7 |
| Stérile de finissage | 305 | 19,1 | 0,09 | 1,35 | 0,012 | 30,1 |
| Stérile de flottation | 170 | 22,7 | 0,14 | 0,63 | 0,007 | 4,35 |

Tableau 6 — Poids des fractions récupérées par rapport au poids du résidu ayant subi la flottation (exprimé en %) et rendement en métaux récupérés (%)

| | Poids | Ag | Pb | Zn | Fe | Cu | $S_{tot}$ |
|---|---|---|---|---|---|---|---|
| Essai 1 | | | | | | | |
| Concentré fini | 84,6 | 78,4 | 8,6 | 99,2 | 94,3 | 99,0 | 97,7 |
| Concentré ébauché | 88,2 | 83,5 | 25,2 | 99,5 | 95,7 | 99,5 | 99,4 |
| Essai 2 | | | | | | | |
| Concentré fini | 85,4 | 73,5 | 10,4 | 97,4 | 86,2 | 99,6 | 88,1 |
| Concentré ébauché | 87,5 | 77,0 | 23,2 | 97,8 | 88,4 | 99,7 | 99,2 |
| Essai 3 | | | | | | | |
| Concentré fini | 87,4 | 91,0 | 15,3 | 99,2 | 98,0 | 98,3 | 98,0 |
| Concentré ébauché | 91,3 | 95,0 | 38,5 | 99,4 | 99,0 | 99,0 | 99,5 |

Les résultats de l'essai 3 effectué suivant la double lixiviation, comparés à ceux des essais 1 et 2 effectués en une seule lixiviation sous pression, indiquent, pour un rendement équivalent de mise en solution du zinc, les avantages suivants :

— une mise en solution globale du cuivre s'élevant à plus de 97 %, alors qu'elle est limitée à moins de 50 % par lixiviation sous pression seule ;

— une très faible sulfatation directe des sulfures qui est de l'ordre de 3 %, alors qu'elle est au moins de 8 % aux essais 1 et 2 ;

— une récupération de l'argent dans le concentré de soufre obtenu par flottation des résidus, qui s'élève à environ 95 % malgré la faible acidité finale de 37 g/l de la solution de la lixiviation sous pression, alors que cette récupération suivant le procédé de lixiviation sous pression seule est limitée à 85 % même si l'acidité est supérieure à 70 g/l et diminue encore si cette acidité diminue.

Exemple 2

1 700 g (compté sec) de matière sulfureuse zincifère de départ ont été chargés dans 12 litres de solution telle que décrite plus haut.

Après lixiviation sous pression effectuée dans les conditions opératoires de l'essai 2 de l'exemple 1, on obtient les mêmes résultats que ceux qui y sont décrits. Entre autres, le rendement de mise en solution du cuivre s'élève à environ 48 %.

La pulpe déchargée de l'autoclave est traitée suivant les méthodes suivantes.

Essai 1. — La pulpe telle quelle est agitée pendant 4 heures à 90 °C en l'absence d'oxygène.

La solution titre en moyenne :

| | |
|---|---|
| $H_2SO_4$ | 57 g/l |
| $Fe^{total}$ | 12,5 g/l |
| $Fe^{3+}$ | 10,5 g/l |

Le résidu obtenu contient 38,2 % du poids de la matière de départ. La teneur en cuivre est de 1,14 %, ce qui correspond à une mise en solution totale du cuivre s'élevant à 53,7 %.

Essai 2. — Le résidu a été séparé de la solution par épaississement. La pulpe décantée a été pulpée dans une solution titrant en moyenne au cours de l'essai :

| | |
|---|---|
| $H_2SO_4$ | 60 g/l |
| $Fe^{total}$ | 10 g/l |
| $Fe^{3+}$ | 2,8 g/l |

Cette pulpe a été agitée pendant 4 heures à 90 °C en présence d'une faible quantité d'oxygène destinée à maintenir la teneur en fer ferrique.

Le résidu obtenu présente un poids égal à 37,6 % du poids initial. La teneur en cuivre est de 0,120 %, ce qui correspond à une mise en solution totale du cuivre s'élevant à 95,20 %.

Exemple 3

12 l de solution provenant de l'autoclave de la lixiviation sous pression sont agités en présence de 900 g (compté sec) de matière sulfureuse de départ ajoutée progressivement et à parts égales au temps O, après 1/2 l et après 1 heure. L'oxygène finement dispersé est injecté pendant toute la durée de l'essai. La température est maintenue à 90 °C.

Les résultats de cette lixiviation sont donnés au tableau suivant.

| Temps H | $H_2SO_4$ g/l | $Fe^{3+}$ g/l | $Fe_{tot}$ g/l | Cu g/l |
|---|---|---|---|---|
| 0 | 40 | 1,8 | 14,0 | 1.375 |
| 1/2 | 35 | 0,5 | 14,3 | 1.375 |
| 1 | 28 | 0,6 | 15,0 | 1.375 |
| 2 | 18 | 0,8 | 15,7 | 1.375 |
| 3 | 12 | 1,2 | 16,2 | 1.310 |
| 4 | 6 | 1,6 | 16,5 | 1.300 |

Le poids de résidu est de 626,4 g, soit 69,6 % de la matière chargée.

On constate que le fer ne subit pas de précipitation et que le cuivre ne précipite que dans de faibles proportions.

L'acidité finale de la solution atteint 6 g/l. Elle présente une valeur suffisamment faible pour permettre de conduire la solution vers l'hydrolyse du fer 25.

Il est évident que l'invention n'est pas limitée aux modes de mise en œuvre du procédé décrit ci-dessus et que de nombreuses modifications peuvent être apportées à ces derniers sans pour autant les soustraire de la portée des revendications suivantes.

**Revendications**

1. Un procédé hydrométallurgique pour extraire du zinc et au moins une partie du cuivre et récupérer du plomb et de l'argent de matières sulfureuses zincifères contenant également du fer et au moins un des métaux : cuivre, plomb et argent comprenant :

(1) un broyage fin de ladite matière sulfureuse zincifère et

(2) une lixiviation de cette matière en au moins 2 étapes comprenant :

(A) une première lixiviation sous pression de cette matière à une température comprise entre 120 et 160 °C, au-delà de la température de fusion du soufre dans des conditions oxydantes et en présence d'une solution aqueuse d'acide sulfurique, le zinc n'étant pas complètement solubilisé ;

(B) une seconde lixiviation du résidu non dissous de la première étape (A) en présence d'une solution aqueuse d'acide sulfurique en excès stœchiométrique par rapport au zinc résiduel et dans des conditions oxydantes obtenues par une fine dispersion d'oxygène de façon à produire d'une part une solution de sulfate de zinc et d'autre part un résidu non dissous contenant du soufre, du zinc résiduel, du cuivre résiduel, du fer et la majeure partie du plomb et de l'argent et on retourne, après séparation liquide-solide, cette solution de sulfate de zinc à la première étape de lixiviation (4),

ledit procédé étant caractérisé en ce que :

(I) au cours de la première étape de lixiviation (4)

(i) on ajoute lesdites matières de départ dans une solution aqueuse sulfurique comprenant également la solution produite à la seconde étape de lixiviation (6), d'une manière telle que le zinc contenu dans ladite matière soit en excès stœchiométrique par rapport à l'acide réellement consommé, cet excès étant inférieur à 15 %, et on laisse la réaction se dérouler en contrôlant la pression d'oxygène jusqu'à ce qu'on obtienne une solution de sulfate de zinc contenant de 20 à 60 g/l d'acide sulfurique libre ;

(ii) on contrôle la pression d'oxygène et l'excès desdites matières dans le but d'empêcher la précipitation du fer solubilisé avec le zinc en limitant la formation de fer ferrique grâce aux propriétés réductrices desdites matières, d'une manière telle que ladite solution de sulfate de zinc contienne une teneur en fer ferrique qui n'excède pas de 1 à 5 g/l ;

(iii) on produit, grâce à ces contrôles, après séparation liquide-solide, un résidu non dissous contenant le soufre ayant réagi sous forme de soufre élémentaire, du zinc, du cuivre et du fer principalement sous forme de sulfures exempts de jarosites et pratiquement tout le plomb et l'argent exempts de jarosites,

(II) au cours de la seconde étape de lixiviation (6)

(i) on effectue l'extraction du zinc contenu dans le résidu de la première étape (4) en mettant en contact ce résidu avec une solution aqueuse d'acide sulfurique à une température inférieure à la température d'ébullition du mélange et à la pression atmosphérique ;

(ii) on contrôle la quantité de cette solution de manière à ce que, après consommation de l'acide libre nécessaire à la mise en solution du zinc résiduel, la solution produite contienne un excès d'acide libre compris entre 60 et 160 g/l ;

(iii) on contrôle le potentiel électrochimique de la solution en ajustant la quantité d'oxygène de manière à produire une solution qui contienne de 2 à 3 g/l de fer ferrique et dans laquelle la majeure partie du cuivre résiduel de la première étape de lixiviation (4) est dissous ;

(iiii) on produit, grâce à ces contrôles, un résidu final insoluble contenant le soufre ayant réagi substantiellement sous forme de soufre élémentaire, du fer sous forme de sulfure exempt de jarosite et la plus grande partie du plomb et de l'argent contenus dans la matière de départ sous une forme minéralogique telle que les minéraux de plomb et d'argent peuvent être récupérés par un procédé de flottation.

2. Un procédé selon la revendication 1, caractérisé en ce qu'on alimente la solution produite à la première étape de lixiviation (4) et contenant de 20 à 60 g/l d'acide sulfurique à une troisième étape de lixiviation (2) dans laquelle :

(i) on ajoute une quantité de ladite matière sulfureuse de départ d'une manière telle que le zinc contenu dans cette matière soit en excès stœchiométrique par rapport à l'acide sulfurique libre contenu dans cette solution, cet excès étant supérieur à 100 % ;

(ii) on contrôle le potentiel électrochimique de la solution en ajustant la quantité d'oxygène, l'excès de matière sulfureuse de départ et la quantité d'oxygène étant réglés de façon à produire une

solution de sulfate de zinc ayant une concentration en acide sulfurique libre comprise entre 4 et 8 g/l et une concentration en fer ferrique comprise entre 1 et 2 g/l ;

(iii) on soumet cette solution après séparation liquide-solide, d'une manière connue, à des traitements de purification, suivis d'une électrolyse dans laquelle du zinc métal est produit et une solution aqueuse d'acide sulfurique est régénérée qui est utilisée dans les première et deuxième étapes de lixiviation (4) et (6) ;

(iiii) on conduit le résidu insoluble contenant du soufre, du sulfure de zinc, du sulfure de cuivre et le fer substantiellement sous forme de sulfure exempt de jarosite et pratiquement tout le plomb et l'argent à la première étape de lixiviation (4) ;

lesdites opérations (i) et (ii) étant effectuées à la pression atmosphérique à une température inférieure à la température d'ébullition du mélange et en présence d'oxygène finement dispersé.

3. Un procédé selon la revendication 1, caractérisé en ce que on conduit la solution de la première étape de lixiviation (4) contenant de 20 à 60 g/l d'acide libre vers une neutralisation (23) de l'acide libre en même temps que la solution (C) issue d'un traitement de lixiviation de calcine produite par grillage (11) de matières sulfureuses zincifères.

4. Un procédé selon la revendication 3, caractérisé en ce qu'on soumet la solution produite à la neutralisation (23) à une hydrolyse en y ajoutant de la calcine en présence d'oxygène en vue de précipiter le fer sous forme de goethite qui est séparé de la solution et rejeté.

5. Un procédé selon la revendication 4, caractérisé en ce qu'on soumet la solution produite à l'hydrolyse (25) à une lixiviation neutre (12) de calcine suivie d'une purification (31) avec de la poussière de zinc et on soumet ensuite cette solution purifiée à une électrolyse (32) dans laquelle du zinc métal est produit et une solution aqueuse d'acide sulfurique est régénérée qui est utilisée à la première (4) et à la deuxième étape (6) de la lixiviation des matières de départ et on fait réagir le résidu de la lixiviation neutre (12) dans une lixiviation acide (14) et on soumet le résidu ainsi obtenu à un traitement comprenant un lessivage à chaud (16), un lessivage très chaud (18) et une étape de réduction (21) par lequel la solution (C) du second procédé est produite.

**Claims**

1. A hydrometallurgical process for extracting zinc and at least a part of the copper and recovering lead and silver from zinc-bearing sulphurous materials also containing iron and at least one of the metals : copper, lead and silver comprising :

(1) a fine grinding of the said zinc-bearing sulphurous material and

(2) a leaching of this material in at least 2 stages comprising :

(A) a first leaching of this material under pressure at a temperature of between 120 and 160 °C, beyond the melting temperature of sulphur under oxidizing conditions and in the presence of an aqueous solution of sulphuric acid, the zinc not being completely solubilized ;

(B) a second leaching of the undissolved residue from the first stage (A) in the presence of an aqueous solution of sulphuric acid in stoichiometric excess relative to the residual zinc and under oxidizing conditions obtained using a fine dispersion of oxygen so as to produce, on the one hand, a solution of zinc sulphate and, on the other hand, an undissolved residue containing sulphur, residual zinc, residual copper, iron and the major proportion of the lead and the silver and, after liquid-solid separation, this solution of zinc sulphate is returned to the first leaching stage (4),

the said process being characterized in that :

(I) during the first leaching stage (4)

(i) the said starting materials are added to an aqueous sulphuric solution also containing the solution produced in the second leaching stage (6), so that the zinc contained in the said material is in stoichiometric excess relative to the acid actually consumed, this excess being below 15 %, and the reaction is left to take place while the oxygen pressure is controlled until a zinc sulphate solution containing from 20 to 60 g/l of free sulphuric acid is obtained ;

(ii) the oxygen pressure and the excess of the said materials are controlled with the objective of the preventing the precipitation of the solubilized iron with the zinc by limiting the formation of ferric iron by virtue of the reducing properties of the said materials, so that the said zinc sulphate solution contains a ferric iron concentration which does not exceed 1 to 5 g/l ;

(iii) by virtue of these controls, after liquid-solid separation there is produced an undissolved residue containing the sulphur which has reacted in the form of elemental sulphur, zinc, copper and iron chiefly in the form of sulphides free from jarosites and practically all the lead and silver which are free from jarosites,

(II) during the second leaching stage (6)

(i) the extraction of the zinc present in the residue from the first stage (4) is carried out by placing this residue in contact with an aqueous solution of sulphuric acid at a temperature below the boiling temperature of the mixture and at atmospheric pressure ;

(ii) the quantity of this solution is controlled so that, after consumption of the free acid required for dissolving the residual zinc, the solution produced contains an excess of free acid of between 60 and

160 g/l ;

(iii) the electrochemical potential of the solution is controlled by adding the quantity of oxygen so as to produce a solution which contains from 2 to 3 g/l of ferric iron and in which the major proportion of the residual copper from the first stage of leaching (4) is dissolved ;

(iiii) by virtue of these controls, an insoluble final residue is produced, containing the sulphur which has reacted substantially in the form of elemental sulphur, iron in the form of sulphide free from jarosite and most of the lead and of the silver which are present in the starting material in a mineralogical form such that the lead and silver ores may be recovered by a flotation process.

2. A process according to Claim 1, characterized in that the solution produced in the first stage of leaching (4) and containing from 20 to 60 g/l of sulphuric acid is fed to a third leaching stage (2), in which :

(i) a quantity of the said sulphurous starting material is added so that the zinc present in this material is in stoichiometric excess relative to the free sulphuric acid present in this solution, this excess being greater than 100 % ;

(ii) the electrochemical potential of the solution is controlled by adjusting the quantity of oxygen, the excess of sulphurous starting material and the quantity of oxygen being adjusted so as to produce a zinc sulphate solution having a free sulphuric acid concentration of between 4 and 8 g/l and a ferric iron concentration of between 1 and 2 g/l ;

(iii) after liquid-solid separation, this solution is subjected, in a known manner, to purification treatments followed by an electrolysis in which zinc metal is produced and an aqueous solution of sulphuric acid is regenerated, which is employed in the first and second stages of leaching (4) and (6) ;

(iiii) the insoluble residue containing sulphur, zinc sulphide, copper sulphide and iron substantially in the form of sulphide free from jarosite and practically all the lead and silver is conveyed to the first stage of leaching (4) ;

the said operations (i) and (ii) being carried out at atmospheric pressure at a temperature below the boiling temperature of the mixture and in the presence of finely dispersed oxygen.

3. A process according to Claim 1, characterized in that the solution from the first stage of the leaching (4) containing from 20 to 60 g/l of free acid is conveyed towards a neutralization (23) of the free acid at the same time as the solution (C) originating from a leaching treatment of calcine produced by roasting (11) the zinc-bearing sulphurous materials.

4. A process according to Claim 3, characterized in that the solution produced in the neutralization (23) is subjected to a hydrolysis by adding calcine thereto in the presence of oxygen with a view to precipitating the iron in the form of goethite, which is separated from the solution and discarded.

5. A process according to Claim 4, characterized in that the solution produced in the hydrolysis (25) is subjected to a neutral leaching (12) of calcine followed by a purification (31) with zinc dust and this purified solution is then subjected to an electrolysis (32) in which zinc metal is produced and an aqueous solution of sulphuric is regenerated and is employed in the first (4) and the second stage (6) of the leaching of the starting materials and the residue from the neutral leaching (12) is reacted in an acidic leaching (14) and the residue thus obtained is subjected to a treatment comprising a hot washing (16), a very hot washing (18) and a reduction stage (21) by means of which the solution (C) of the second process is produced.

**Patentansprüche**

1. Hydrometallurgisches Verfahren zum Auslaugen von Zink und mindestens eines Teils des Kupfers und zum Rückgewinnen von Blei und Silber aus Schwefel und Zink enthaltenden Materialien, die auch Eisen und mindestens eines der Metalle der Gruppe bestehend aus Kupfer, Blei und Silber enthalten, umfassend die Schritte :

(1) eine Feinmahlung des genannten Schwefel und Zink enthaltenden Materials und

(2) eine Auslaugung dieses Materials in mindestens zwei Stufen :

(A) eine erste Auslaugung dieses Materials unter Druck bei einer Temperatur zwischen 120° und 160 °C über der Schmelztemperatur des Schwefels unter oxidierenden Bedingungen und in Gegenwart einer wässerigen Schwefelsäurelösung, wobei das Zink nicht vollstandig gelöst wird ;

(B) eine zweite Auslaugung des nicht gelösten Rückstandes aus der ersten Stufe in Gegenwart einer wässrigen Lösung von Schwefelsäure im stöchiometrischen Überschuß in bezug auf das restliche Zink und unter oxidierenden Bedingungen, die durch feinverteilten Sauerstoff, erzielt werden, sodaß einerseits eine Zinksulfatlösung und anderseits ein nicht gelöster Rückstand gebildet wird, der Schwefel, restliches Zink, restliches Kupfer, Eisen und den Großteil des Bleis und des Silbers enthält, wobei nach der Flüssigkeit/Feststoff-Trennung diese Zinksulfatlösung zur ersten Auslaugungsstufe (4) zurückgeführt wird,

wobei das Verfahren dadurch gekennzeichnet ist, daß

(I) bei der ersten Auslaugungsstufe (4)

(i) die genannten Ausgangsmaterialien einer wässerigen Schwefelsäurelösung, die auch die in der zweiten Auslaugungsstufe (6) resultierende Lösung enthält, so zugegeben werden, daß das in dem

genannten Material enthaltene Zink in stöchiometrischem Überschuß in bezug auf die tatsächlich verbrauchte Säure ist, wobei dieser Überschuß kleiner als 15 % ist, und die Reaktion unter Regelung des Sauerstoffdrucks ablaufen gelassen wird, bis eine Zinksulfatlösung erhalten wird, die 20 bis 60 g/l freie Schwefelsäure enthält ;

(ii) der Sauerstoffdruck und der Überschuß der genannten Materialien im Hinblick auf eine Verhinderung der Ausfällung gelösten Eisens mit dem Zink geregelt werden, indem die Bildung von Eisen (III) dank der reduzierenden Eigenschaften der genannten Materialien so begrenzt wird, daß die genannte Zinksulfatlösung einen Eisen (III)-Gehalt aufweist, der 1 bis 5 g/l nicht übersteigt.

(iii) dank dieser Regelungen nach der Flüssigkeits/-Feststoff-Trennung ein nicht gelöster Rückstand gebildet wird, der Schwefel, der zu Elementarschwefel reagiert hat, Zink, Kupfer und Eisen, hauptsächlich in Form von Sulfiden, die frei von Jarositen sind, und praktisch das gesamte Blei und Silber, frei von Jarositen, enthält,

(II) bei der zweiten Auslaugungsstufe (6)

(i) die Auslaugung des in dem Rückstand der ersten Stufe (4) enthaltenen Zinks vorgenommen wird, indem dieser Rückstand mit einer wässrigen Schwefelsäurelösung bei einer Temperatur unterhalb der Siedetemperatur des Gemisches und bei Atmosphärendruck in Kontakt gebracht wird ;

(ii) die Menge dieser Lösung so geregelt wird, daß nach dem Verbrauch der für das Lösen des restlichen Zinks notwendigen freien Säure die resultierende Lösung einen Überschuß an freier Säure zwischen 60 und 160 g/l enthält ;

(iii) das elektrochemische Potential der Lösung gesteuert wird, indem die Sauerstoffmenge so eingestellt wird, daß eine Lösung resultiert, die 2 bis 3 g/l Eisen (III) enthält und in der der Großteil des restlichen Kupfers der ersten Auslaugungsstufe (4) gelöst ist ;

(iiii) dank dieser Steuerung ein unlöslicher Endrückstand gebildet wird, der Schwefel, der hauptsächlich zu Elementarschwefel reagiert hat, Eisen in Sulfidform, das frei von Jarosit ist, und den Großteil des im Ausgangsmaterial enthaltenen Bleis und Silbers in mineralogischer Form, wie die Minerale von Blei und Silber, die durch einen Flotationsprozeß rückgewonnen werden können, enthält.

2. Verfahren nach Anspruch 1, dadurch gekennzeichnet, daß die in der ersten Auslaugungsstufe (4) resultierende Lösung, die 20 bis 60 g/l Schwefelsäure enthält, einer dritten Auslaugungsstufe (2) zugeführt wird, in der

(i) eine solche Menge des genannten Schwefel-Ausgangsmaterials zugegeben wird, daß das in diesem Material enthaltene Zink in stöchiometrischem Überschuß in bezug auf die in dieser Lösung enthaltene freie Schwefelsäure ist, wobei dieser Überschuß mehr als 100 % beträgt.

(ii) das elektrochemische Potential der Lösung gesteuert wird, indem die Sauerstoffmenge eingestellt wird und der Überschuß an Schwefel-Ausgangsmaterial sowie die Sauerstoffmenge so geregelt werden, daß eine Zinksulfatlösung resultiert, die eine Konzentration an freier Schwefelsäure zwischen 4 und 8 g/l und eine Konzentration an Eisen (III) zwischen 1 und 2 g/l enthält ;

(iii) diese Lösung nach der Flüssigkeit/Feststoff-Trennung auf bekannte Weise Reinigungsbehandlungen gefolgt von einer Elektrolyse unterworfen wird, bei der metallisches Zink erzeugt wird und eine wässrige Schwefelsäurelösung rückgewonnen wird, die in der zweiten und dritten Auslaugungsstufe (4 und 6) eingesetzt wird ;

(iiii) der unlösliche Rückstand, der Schwefel, Zinksulfid, Kupfersulfid und Eisen, hauptsächlich in Sulfidform und frei von Jarosit, sowie praktisch das gesamte Blei und Silber enthält, der ersten Auslaugungsstufe (4) zugeführt wird ;

wobei die Arbeitsgänge (i) und (ii) bei Atmosphärendruck und bei einer Temperatur unterhalb der Siedetemperatur des Gemisches und in Gegenwart von feinverteiltem Sauerstoff durchgeführt werden.

3. Verfahren nach Anspruch 1, dadurch gekennzeichnet, daß die 20 bis 60 g freie Schwefelsäure pro Liter enthaltende Lösung der ersten Auslaugungsstufe (4) einer Neutralisation (23) der freien Schwefelsäure zugeführt wird und gleichzeitig die Lösung (C) aus einer Auslaugung von durch Kalzinieren (11) von Schwefel und Zink enthaltenden Materialien entstandenem Rösterz resultiert.

4. Verfahren nach Anspruch 3, dadurch gekennzeichnet, daß die bei der Neutralisation (23) resultierende Lösung einer Hydrolyse unterworfen wird, indem man Rösterz in Gegenwart von Sauerstoff zugibt, um das Eisen in Form von Goethit auszufällen, das von der Lösung abgetrennt und verworfen wird.

5. Verfahren nach Anspruch 4, dadurch gekennzeichnet, daß die bei der Hydrolyse (25) resultierende Lösung einer neutralen Rösterzauslaugung gefolgt von einer Reinigungsbehandlung (31) mit Zinkstaub unterworfen wird und danach die gereinigte Lösung einer Elektrolyse (32) unterworfen wird, bei der metallisches Zink erzeugt und eine wässrige Schwefelsäurelösung rückgewonnen wird, die in der ersten (4) und in der zweiten Stufe (6) der Auslaugung der Ausgangsmaterialien eingesetzt wird, der Rückstand der neutralen Auslaugungsbehandlung (12) in einer Auslaugungssäure (14) reagieren gelassen wird und der so erhaltene Rückstand einer Behandlung unterworfen wird, die ein Auslaugen (16) bei hoher Temperatur, ein Auslaugen (18) bei sehr hoher Temperatur und eine Reduktionsstufe (21) beinhaltet und durch die die Lösung (C) des zweiten Prozesses erzeugt wird.

FIG. 1

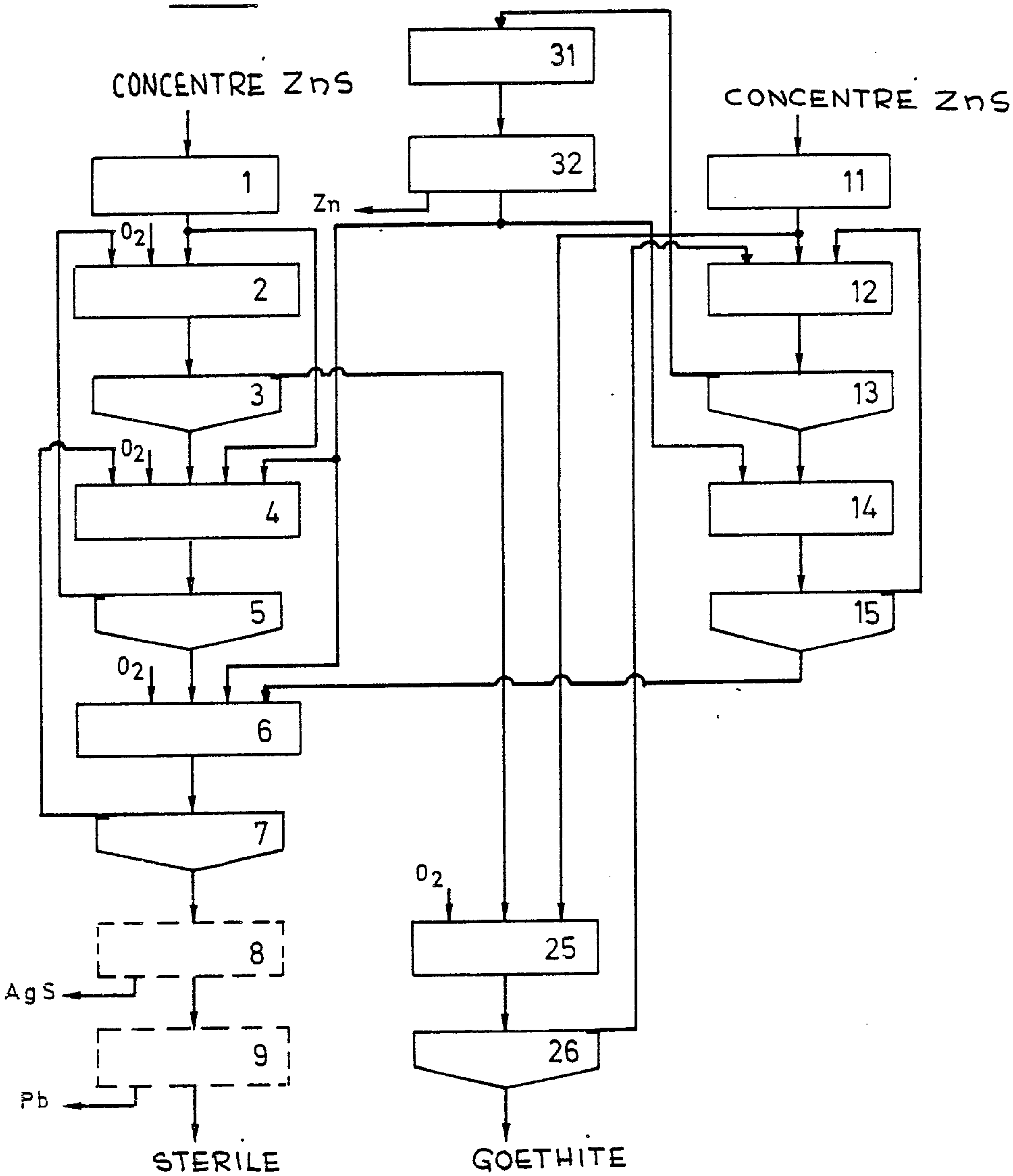
CONCENTRE ZnS
CONCENTRE ZnS
1
2
3
4
5
6
7
8
9
11
12
13
14
15
25
26
31
32
$O_2$
$O_2$
$O_2$
$O_2$
Zn
AgS
Pb
STERILE
GOETHITE

FIG. 2

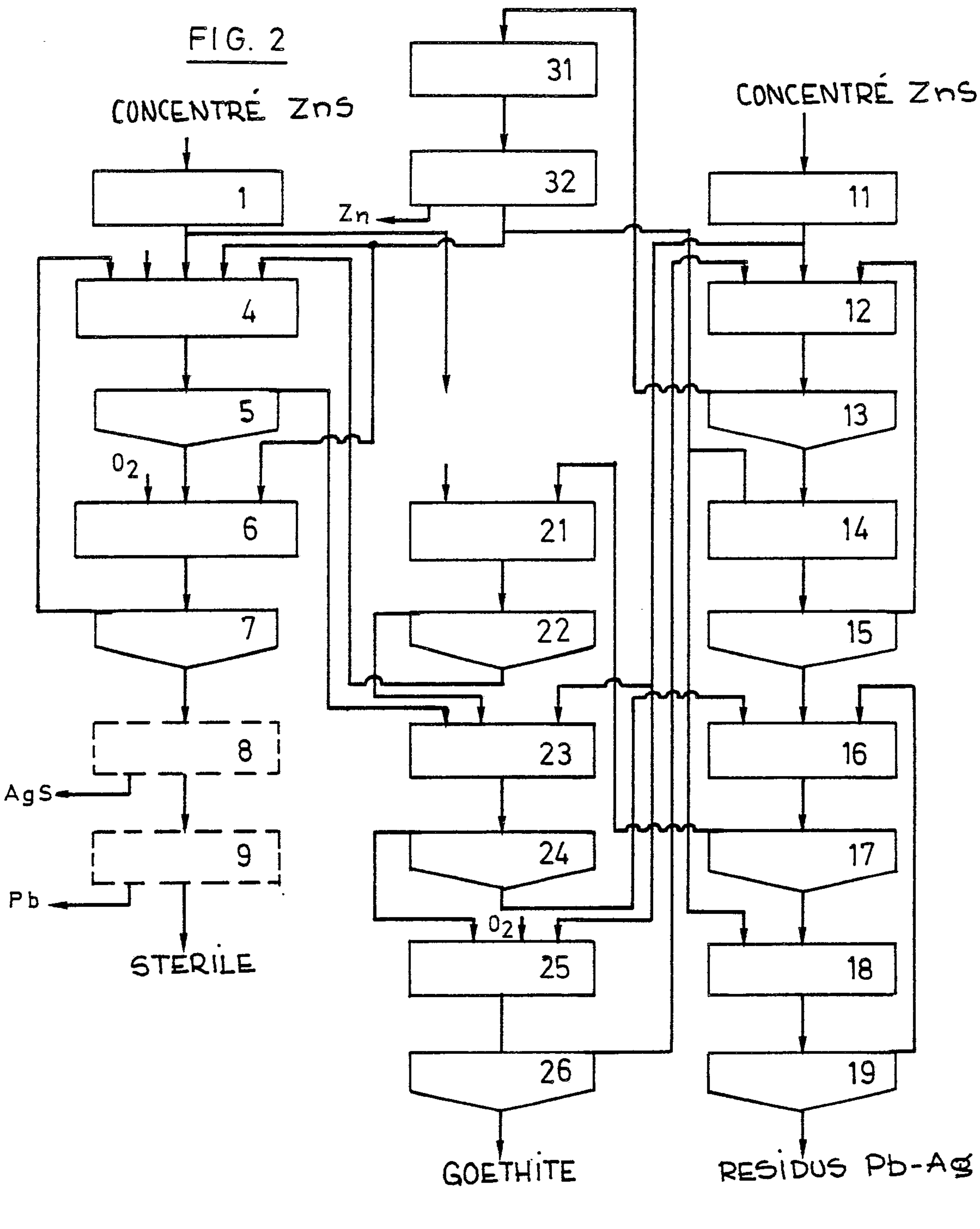
CONCENTRÉ ZnS
1
4
5
O2
6
7
8
AgS
9
Pb
STERILE
31
32
Zn
21
22
23
24
O2
25
26
GOETHITE
CONCENTRÉ ZnS
11
12
13
14
15
16
17
18
19
RESIDUS Pb-Ag

FIG. 3

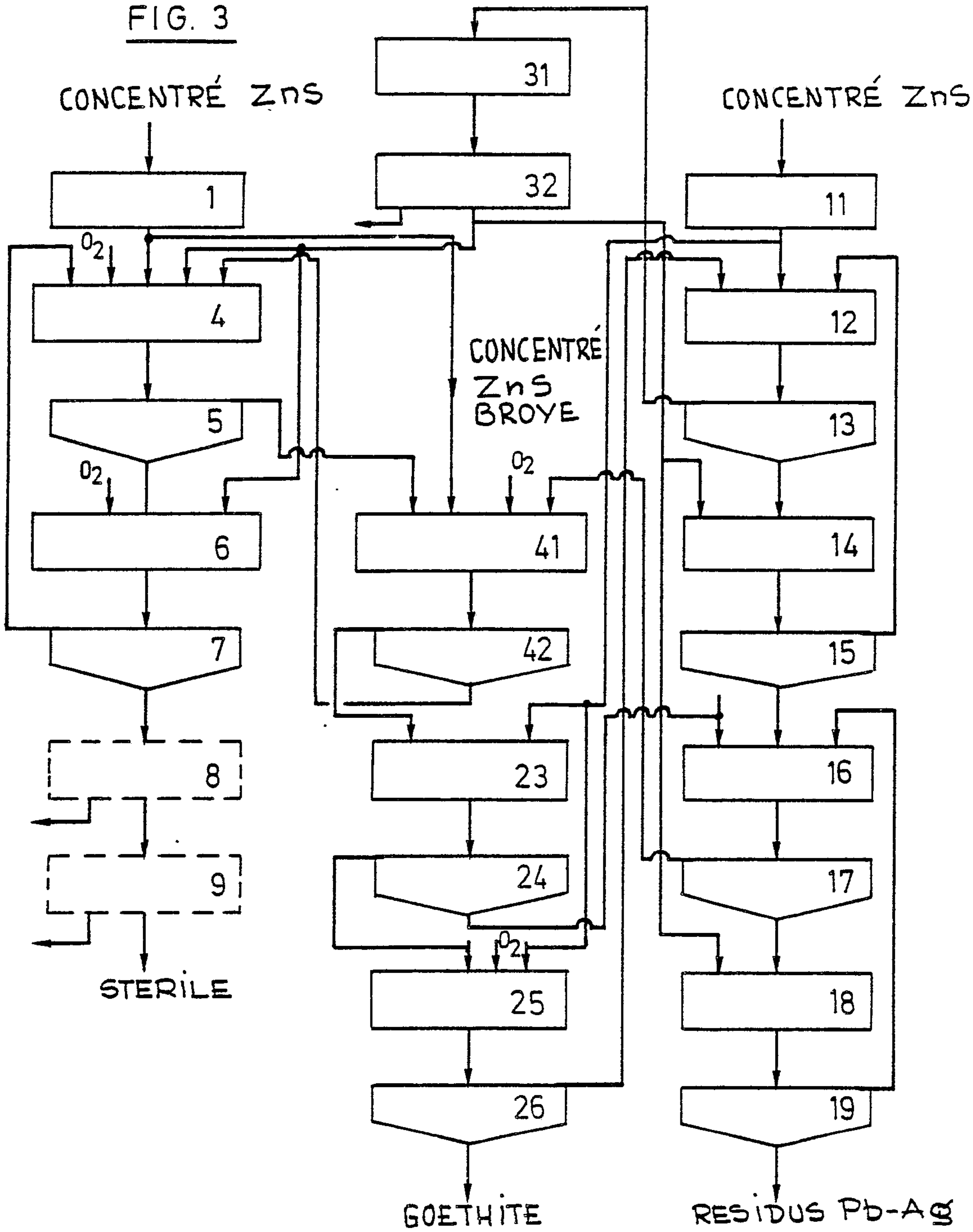
CONCENTRÉ ZnS
CONCENTRÉ ZnS
CONCENTRÉ ZnS BROYE
$O_2$
1
4
5
6
7
8
9
11
12
13
14
15
16
17
18
19
23
24
25
26
31
32
41
42
STERILE
GOETHITE
RESIDUS Pb-Ag